(19) **Europäisches Patentamt**

**European Patent Office**

**Office européen des brevets**

(11) **EP 1 066 101 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(51) Int Cl.[7]: **B01D 15/08**, B01D 15/00, B01J 47/02, B01J 47/14, C02F 1/28, C02F 1/42

(21) Anmeldenummer: **99915508.8**

(22) Anmeldetag: **27.02.1999**

(86) Internationale Anmeldenummer:
**PCT/DE1999/000611**

(87) Internationale Veröffentlichungsnummer:
**WO 1999/048587 (30.09.1999 Gazette 1999/39)**

(54) **VERFAHREN FÜR FRONTCHROMATOGRAPHISCHE DEKONTAMINATION**

PROCESS FOR FRONTAL CHROMATOGRAPHIC DECONTAMINATION

PROCEDE POUR DECONTAMINATION CHROMATOGRAPHIQUE FRONTALE

(84) Benannte Vertragsstaaten:
**BE CH DE FR GB IT LI**

(30) Priorität: **24.03.1998 DE 19812821**

(43) Veröffentlichungstag der Anmeldung:
**10.01.2001 Patentblatt 2001/02**

(73) Patentinhaber: **Forschungszentrum Jülich GmbH 52425 Jülich (DE)**

(72) Erfinder: **WENZEL, Ulrich D-52428 Jülich (DE)**

(56) Entgegenhaltungen:
| | |
|---|---|
| **DE-A- 2 355 422** | **DE-A- 3 432 116** |
| **US-A- 4 237 002** | **US-A- 4 534 865** |
| **US-A- 5 071 547** | **US-A- 5 443 623** |

**Beschreibung**

Die Erfindung betrifft ein Verfahren zur Trennung von Stoffen aus einer Flüssigkeit, also ein Verfahren zur frontchromatographischen Dekontamination. Die mit Stoffen belastete Flüssigkeit wird Speiselösung genannt. Die Speiselösung wird in eine Säule zur Dekontamination eingespeist und hier in einem chromatographischen Bett (Dekontaminationsmittel) von den Stoffen befreit.

Ein Beispiel für eine frontchromatographische Dekontamination stellt die Wasserentsalzung durch ein Ionenaustauscherbett dar. Salzhaltiges Wasser wird im Ionenaustauscher vom Salz befreit. Der Salzkonzentrationsverlauf im Effluenten wird mit einer Leitfähigkeitsmessung, also durch eine Prozeßkontrollanalytik überwacht. (Unter Effluent, auch Säuleneffluent genannt, ist die Lösung zu verstehen, die aus der Säule austritt.) Bei Auftreten einer meßbaren Leitfähigkeit wird die Trennung beendet, die Säule gereinigt und anschließend für eine erneute Trennung vorbereitet.

Die Qualität eines frontchromatographischen Dekontaminationsverfahrens hängt somit von der Erfassungsgrenze der Prozeßkontrollanalytik ab. Diese Analytik sollte in den Trennprozeß integriert sein (online Analytik), weil Resultate mittels Probenentnahme, Probenvorbereitung und Messung durch den erforderlichen Zeitaufwand nichtmehr den Istzustand der Trennung widerspiegeln und somit zu schlechteren Trennungen führen. Online - Analysen weisen aber im allgemeinen eine geringe Genauigkeit und eine schlechte Erfassungsgrenze auf, vor allem, wenn der Efflueht durch die Messung nicht verändert werden darf. Dadurch können nur niedrige Dekontaminationsfaktoren erzielt werden. Dies ist der Hauptgrund dafür, daß nur wenige technische, frontchromatographische Verfahren existieren. (Unter Dekontaminationsfaktor ist das Mengenverhältnis des Kontaminanten in Speise- und dekontaminierter Lösung zu verstehen.)

Grundsätzlich wird ein frontchromatographisches Verfahren mit einer Säule durchgeführt, die von einer kontaminierten Flüssigkeit, also zum Beispiel von einer Lösung passiert wird. Eine kontaminierte Flüssigkeit weist zumindest eine weitere Komponente auf. Innerhalb der Säule befindet sich das sogenannte chromatographische Bett. Dieses besteht im Fall der Wasserentsalzung aus Ionenaustauschern. Durch das Bett wird zumindest eine Komponente von der Flüssigkeit abgetrennt.

Passiert eine Lösung mit einem Kontaminanten kontinuierlich die Säule, so tritt schließlich eine Sättigung des chromatographischen Bettes mit dem Kontaminanten ein. Ist das chromatographische Bett gesättigt, so vermag die Säule die herauszutrennenden Komponenten nicht mehr zurückzuhalten. Der Grad der Sättigung des Bettes entspricht dem Dekontaminationsfaktor im Effluenten.

Zur Erzielung guter Trennergebnisse muß frühzeitig erkannt werden, sobald aufgrund einer eingetretenen Sättigung keine zufriedenstellende Dekontamination mehr möglich ist. Um diesen Zeitpunkt frühzeitig zu erkennen, bedarf es hochempfindlicher Echtzeit - Meßgeräte, die regelmäßig nicht zur Verfügung stehen.

Aus US 4,534,865 A ist eine Vorrichtung zum Dakontaminieren einer Flüssigkeit bekannt, die zwei hintereinander geschaltete, mit Dekontaminationsmittel gefüllte Säulen sowie eine weitere, zwischen diese Säulen geschaltete Säule mit vernetztem organischem Polymer aufweist. Das vernetzte organische Polymer diese Säule kann ebenfalls die Kontamination adsorbieren, wobei das Polymer entsprechend aufquillt und so der Durchfluss zunächst verringert und letztlich stoppt. Optional kann durch einen Drucksensor die Druckdifferenz gemessen werden, die sich vor und hinter der Säule mit dem vernetzten Polymer einstellt. Dieser Drucksensor regelt ein Ventil, mit dem der Durchfluß in die erste Säule gestoppt werden kann.

In us 5,443,623 A wird eine Adsorbervorrichtung zur Dekontamination eines Gases beschrieben. Die Vorrichtung weist zwei identische Säulen auf, die jeweils eine Adsorberfüllung und eine nachgeschaltete Sicherheitsfüllung aufweisen. Eine Gaskontrolleinrichtung leitet zunächst das zu dakontaminierende Gas durch die erste Säule und ein Spülgas durch die zweite Säule. Das kontaminierte Gas wird dabei zunächst durch die Adsorberfüllung und anschließend durch die Sicherheitsfüllung der ersten Säule geleitet und dabei dekontaminiert. Gleichseitig wird das Spülgas zunächst durch die sicherheitsfüllung und anschließend durch die Adsorberfüllung der zweiten Säule geleitet, wobei die adsorbierten Bestandteile der Füllungen durch das Spülgas aufgenommen und die zweite Säule somit regeneriert wird. Die Gaskontrolleinrichtung ist in der Lage eine Durchbruchsfront einer Kontamination zu detektierten, bevor sie in die Sicherheitsfüllung eintritt. Zu diesem Zeitpunkt wechselt die Gaskontrolleinrichtung der Gasstrom von der ersten auf die zweite Säule, während nunmehr die erste Säule mit Spülgas gespült wird. Auf diese Weise ist eine kontinuierliche Dekontamination des Gases gewährleistet.

Aufgabe der Erfindung ist die Schaffung eines frontchromatographischen Verfahrens, mit dem frühzeitig Sättigungsgrade erkannt werden, ohne entsprechend hochempfindliche Meßgeräte einsetzen zu müssen.

Die Aufgabe wird durch ein Verfahren mit den Merkmalen des Hauptanspruchs gelöst.

Eine geeignete Vorrichtung zur Durchführung des erfindungsgemäßen Verfahrens umfaßt zwei Säulen mit je einem chromatographischen Bett. Das Ende der einen Säule ist mit dem Anfang der nächsten Säule so verbunden, daß eine Flüssigkeit von der einen Säule zur anderen weitergeleitet wird. Innerhalb dieser Verbindung ist ein Maßgerät angeordnet. Das Meßgerät zeigt die Kontamination einer Flüssigkeit an.

Unter Kontamination ist allgemein zu verstehen, daß eine Flüssigkeit mit Stoffen belastet ist, die durch das ungesättigte chromatographische Bett abgetrennt werden. Der Eintritt der Säule, durch den kontaminierte Flüssigkeit eingeleitet wird, wird im folgenden Anfang der ersten Säule genannt. Der Austritt, durch den die schließlich dekontaminierte Flüssigkeit die anspruehsgemäße Vorrichtung wieder verläßt, wird im folgenden Ende der zweiten Säule genannt.

Wird eine kontaminierte Flüssigkeit durch die erste Säule geleitet, so gelangt die Flüssigkeit über das Meßgerät in die zweite Säule hinein. Das Meßgerät zeigt zwar bei Erreichen einer Sättigungsgrenze in der ersten Säule relativ spät das Austreten kontaminierter Flüssigkeit aus der ersten Säule an. Die nachfolgende Säule stellt jedoch sicher, daß die aus der ersten Säule kontaminiert austretende Flüssigkeit in der zweiten Säule den gewünschten Dekontaminationsgrad erreicht.

Bei geeigneter Auslegung der Säulen wird zunächst dekontaminierte Flüssigkeit aus der zweiten Säule austreten, auch wenn das Meßgerät kontaminierte Flüssigkeit anzeigt. Der Grad der Kontamination der Flüssigkeit, die aus dem Ende der ersten Säule austritt, korreliert mit dem Grad der Kontamination der Flüssigkeit, die aus dem Ende der zweiten Säule austritt. Es kann daher ein vergleichsweise unempfindliches Meßgerät eingesetzt werden, um rechtzeitig das drohende Erreichen der Sättigungsgrenze in der zweiten Säule zu erkennen. Hochempfindliche Meßgeräte sind hierfür nicht erforderlich.

In einer vorteilhaften Ausgestaltung der Vorrichtung ist eine Umschalteinrichtung vorgesehen, die das Meßgerät an den Anfang der ersten Säule zu schalten vermag. Hierunter ist zu verstehen, daß durch eine Umschaltung erreicht wird, daß die Kontamination der Flüssigkeit, die den Anfang der ersten Säule passiert, vom Meßgerät gemessen wird. Das Meßgerät liefert dann als Meßwert nicht mehr die Kontamination der Flüssigkeit, die von der ersten Säule in die zweite gelangt.

Die Umschaltung dient einer vorteilhaften Regenerationsweise der Vorrichtung. Nach Umschaltung des Meßgerätes an den Anfang der ersten Säule wird ein Regenerierungsmittel entgegengesetzt zur ursprünglichen Fließrichtung durch die beiden Säulen hindurchgeleitet. So wird sichergestellt, daß durch das Ende der zweiten Säule keine kontaminierte Flüssigkeit fließt. Dieses Ende kann folglich nicht kontaminiert werden.

Das Messgerät wird an den Anfang der ersten säule geschaltet, um so festzustellen zu können, wann kontaminationsfreie Flküssigkeit aus dem Anfang der ersten Säule herausfließt. Wird eine solche kontaminationsfreie Flüssigkeit am Anfang der ersten Säule durch das Meßgerät angezeigt, so ist die Regenerierung abgeschlossen. Die Vorrichtung ist dann wieder einsatzbereit.

Die Erfindung bezieht sich auf ein frontchromatographische Trennverfahren, das eine Dekontamination von Lösungen bis zu einem gewünschten Dekontaminationsfaktor auch dann erlaubt, wenn die dem Faktor entsprechende Konzentration an Kontaminanten weit unterhalb der Erfassungsgrenze der Prozeßkontrollanalytik (Meßempfindlichkeit des anspruchsgemäßen Meßgerätes) liegt.

Bei der frontchromatographischen Beladung einer Säule wird der Konzentratiorraverlauf im Effluenten (Durchbruchskurve) durch die kumulative, standardisierte Häufigkeitsfunktion beschrieben. Diese Funktion hat bei einer Effluentenkonzentration $c_{effluent} = 0{,}5\ c_{feed}$ einen Wendepunkt. (Unter Effluentenkonzentration $c_{effluent}$ ist die Konzentration des Kontaminanten im Effluenten, unter $c_{feed}$ ist die Konzentration des Kontaminanten in der Speiselösung zu verstehen.) Das entsprechende Effluentenvolumen (Durchbruohavolumen $V_{BT}$) ist unabhängig vom Durchsatz: Werden mehrere Chargen einer Lösung durch dieselbe Säule durchgesetzt, tritt die Effluentenkonzentration $0{,}5\ c_{feed}$ immer bei demselben Volumen $V_{BT}$ auf. (Unter Effluentenvolumen ist das Gesamtvolumen, das aus der Säule ausgetreten ist, zu verstehen. Mit Durchbruchsvolumen wird das Volumen bezeichnet, bei dem die Konzentration des Kontaminanten im Effluenten halb so groß ist wie in der Speiselösung.)

Bei geringen Effluentenkonzentrationen treten starke Abweichungen vom theoretischen Kurvenverlauf auf. Untersuchungen ergaben, daß diese Abweichungen durch einen Verlauf zwischen Säulenwand und anliegender Pärtikelschicht verursacht werden, weil dort nur die Hälfte der aktiven Rückhalteträger der Säulenfüllung vorhanden ist. (Als Rückhalteträger werden die einzelnen Partikel des chromatographischen Betts bezeichnet.) Es konnte experimentell nachgewiesen werden, daß auch der Vorlauf durch eine kumulative, standardisierte Häufigkeitsfunktion beschrieben werden kann. Die Parameter des Wendepunkts dieser Kurve stehen zu den Parametern des Wendepunktes der gesamten Durchbruchskurve in einem festen Verhältnis. (Die Durchbruchskurve ist der Konzentrationsverlauf des Kontaminanten im Effluenten.) Für die Konzentration $c_{BO}$ am Wendepunkt des Vorlaufs gilt:

$$c_{BO} = (d/D)\ c_{feed} \qquad (1)$$

d: Partikeldurchmesser der Säulenfüllung
D: Säulendurchmesser

Für das Volumen $V_{BO}$ gilt:

$$V_{BO} \cong 0{,}5\ V_{BT} \qquad (2)$$

Das gesamte Frontchromatogramm enthält somit zwei fixpunkte, den ersten mit der normalerweise nicht meßbaren Konzentration $c_{BO}$ bei dem Effluentenvolumen $V_{BO}$, den zweiten bei der normalerweise meßbaren Konzentration 0,5 $c_{feed}$ mit dem Durchbruchvolumen $V_{BT}$. Das Verhältnis der beiden Volumina $V_{BO}$ zu $V_{BT}$ ist konstant und läßt sich weder durch die Fließgeschwindigkeit noch durch das vorliegende chemische System beeinflussen.

Zur Ausnutzung dieser Gesetzmäßigkeiten werden zwei identische Säulen hintereinander geschaltet und ein geeigneter Online-Detektor (Meßgerät) dazwischen plaziert. Der Detektor (das Meßgerät) mißt die Konzentration im Effluenten der ersten Säule. Hat diese Konzentration einen Wert von 50 % der Speiselösung (0,5 $c_{feed}$) erreicht, so beträgt die Konzentration im Effluenten der zweiten Säule unter Berücksichtigung der Leervolumina der Rohrleitungen und des Trennbetts (d/ D) $c_{feed}$ entsprechend Gleichung (1) (Trennbett: Synonym zu chromatografischem Bett). Das gesamte Volumen, das durch die Trennvorrichtung geflossen ist, entspricht dem Durchbruchsvolumen der ersten Säule.

Erfindungsgemäß ist vorgesehen, die Beladung bei Erreichen des Abbruchvolumens $V_{BO}$ - $V_{BT1}$ abzubrechen. Dieses Volumen wird durch die Trennbettmenge $V_{Harz}$ der ersten Säule und dem Verteilungskoeffizienten $K_D$ zwischen mobiler und stationärer Phase bestimmt:

$$V_{BO} = K_D \, V_{Harz\,1} = 0{,}5 \, K_D \, V_{harz} \qquad (3)$$

Die Endkonzentration bestimmt den Dekontaminationsfaktor. Nach Gleichung 1 läßt sich diese Konzentration durch Wahl des Verhältnisses von Partikelzu Säulendurchmesser in einer gewünschten Weise verändern.

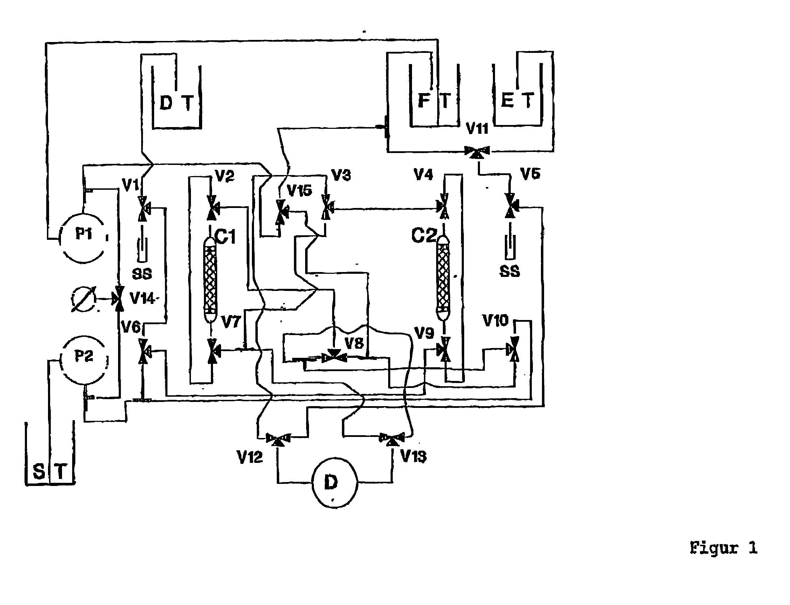

Figur 1 zeigt ein Fließbild, das zum Vermeiden einer Querkontamination dient. (Querkontamination ist eine Kontamination der Trennanlage bzw. des Arbeitsplatzes, die in die dekontaminierte Lösung gelangen kann.) Eine Querkontamination droht insbesondere bei längerem Betrieb der Anlage. Bei der Beladung wird die Speiselösung aus dem Tank FT mit einer Pumpe (Pumpen: P1, P2, ...) durch ein Ventilsystem (Ventile: V1, V2, ...) in die erste Säule C1, danach durch den Detektor D in die zweite Säule C2 und anschließend in den Produkttank DT gemäß folgendem Weg gefördert:

FT - P1 - V15 - V8 - V2 - C1 - V7 - V13 - D - V12 - V3

- V 4 - C2 - V9 - V6 - V1 - DT

Einen zweiten Trennschritt stellt das Waschen der Saule dar, bei dem die nicht gereinigte Speiselösung aus den Rohrleitungen und dem Säulenzwischenkornvolumen entfernt wird. (Zwischenkornvolumen ist das Volumen im Säulenbett, das nicht von den Harzpartikeln ausgefüllt wird.) Hierfür wird die Waschlösung aus dem Tank ST mit einer zweiten Pumpe im Gegenstrom erst in die zweite Säule C2, von dort in den Detektor D und anschließend durch die erste Säule C1 zurück in den Tank FT gefördert. Beim Waschschritt findet nur eine Verdrängung der Lösung im System statt, und beide Säulen verhalten sich wieder identisch. Der Detektor ist dabei zwischen die Säulen geschaltet. Beim Maschen der Säulen ist eine Konzentrationsabnahme im Detektor zu beobachten. Säule C2 ist vollständig gewaschen, wenn der Detektor wieder eine plötzliche Konzentrationszunahme anzeigt. Wegen der Identität beider Säulen ist der Waschschritt nach dem doppelten Volumen beendet. Während des Waschens wird folgender Fluß eingehalten:

ST - P2 - V6 - V9 - C2 - V4 - V3 - V12 - D - V13 - V7

- C1 - V2 - V8 - V15 - FT.

Der letzte Trennschritt besteht in der Elution der Säulen. (Unter Trennschritt versteht man die einzelnen Operationen einer Trennung. Bei der chromatographischen Trennung unterscheidet man: 1) Beladen der Säule, d.h. Beschicken der Säule mit Speiselösung; 2) Waschen der Säule, um die Speiselösung aus dem Zwischenkornvolumen und den Rohrleitungen zu verdrängen; 3) Eluieren der Säule, um die abgetrennte Komponente aus dem Harz zu entfernen; 4) Regenerieren der Säule, um die Trennbedingungen für das Beladen wieder herzustellen.) Dabei werden die Kontaminanten durch ein geeignetes Lösungsmittel aus dem Trennbett eluiert. Wegen ihrer unterschiedlichen Beladung können beide Säulen nicht mehr als identisch betrachtet werden, und es ist vorteilhafter, den Detektor hinter die zweite Säule zu schalten. Es wird im Gegenstrom wie folgt eluiert:

ST - P2 - V6 - V9 - C2 - V4 - V3 - V7 - C1 - V2 -

V8 - V13 - D - V12 - V5 - V11 - ET.

Die Elution ist beendet, wenn der Detektor wieder den Nullwert anzeigt.

Bei dieser Verfahrensweise wird die Leitung zwischen Säule C2 und dem Produkttank DT immer kontaminationsfrei gehalten und nicht gereinigte Lösung im System zurück in den Tank FT gefördert. Auch eine unvollständige Elution würde die Beladung der nachfolgenden Charge nicht signifikant verfälschen, da sich nicht eluierte Kontaminanten im Kolonnenkopf der Säule C1 sammeln und bei der nächsten Beladung sofort von der Säulenfüllung wieder gebunden werden. (Unter Kolonnenkopf ist der oberste Teil der Säule zu verstehen, der auch Säulenkopf genannt wird.)

Die Erfindung bezieht sich also auf ein Konzept, durch das ein frontchromatographischer Dekontaminationsprozeß auch unterhalb der Erfassungsgrenze des verwendeten Konzentrationskontrollsystems (Meßgerätes) noch hinreichend genau überwacht werden kann.

Das Konzept beruht vorteilhaft auf zwei Konzentrationspunkten in einem Frontchromatogramm, deren entsprechende Elutionsvolumina in einem konstanten Verhältnis (0,5) miteinander stehen. Zwei identische Chromatographiesäulen werden nun derart hintereinander geschaltet, daß der Effluent der ersten Säule erst durch einen Detektor gefördert wird, bevor er in den Kopf (Anfang) der zweiten Säule eingespeist wird. Wird nun die erste Konzentration ($c_1 = 0{,}5c_{feed}$) im Effluenten der ersten Säule gemessen, so ist sichergestellt, daß die zweite Konzentration ($c_2 = d/D \, c_{feed}$) im Effluenten der zweiten Säule auftritt. Bei dieser Konzentration wird die Beladung beendet.

Die Kapazität der Trenneinheit wird durch die Menge der Säulenfüllung, die Effektivität durch das geometrische Verhältnis von Partikel- zu Säulendurchmesser bestimmt.

Die nachfolgenden Trennschritte Waschen und Elution werden im Gegenstrom betrieben. Dadurch wird eine Querkontamination des dekontaminierten Produkts vermieden. Nicht gebundene Kontaminanten werden während des Waschschritts wieder im Tank FT gesammelt. Nicht vollständig eluierte Kontaminanten verbleiben im ersten Säulenkopf und werden bei der nächsten Beladung wieder gebunden. FT, ST und ET stellen in Figur I Tanks und SS eine Probeentnahmestation dar. V bezeichnet die Ventile der Trenneinheit.

## Patentansprüche

1. Verfahren zur frontchromatographischen Dekontamination einer Lösung mit einer Ausgangskonzentration $C = C_{feed}$ bis zu einer maximalen Grenzkonzentration $C_{Grenz}$, mit den Schritten:

   a) Es werden zwei identische Adsorptionssäulen vorgesehen, bei denen das Verhältnis von Partikeldurchmesser d der Säulenpackung zum Durchmesser D der Adsorptionssäule entsprechend dem Verhältnis von $C_{Grenz}$ zu $C_{feed}$ gewählt wird,
   b) die Lösung wird durch die erste Adsorptionssäulen geleitet, wo sie zumindest teilweise dekontaminiert wird,
   c) die aus der ersten Adsorptionssäule austretende Lösung mit der Konzentration $C_1$ wird einem Messgerät zugeführt, welches den Grad der Kontamination misst,
   d) die Lösung wird anschließend in der zweiten Adsorptionssäule weiter dekontaminiert,
   e) die Schritte a) bis d) werden abgebrochen sobald das Messgerät die Konzentration $C_1 =$

0,5 $C_{feed}$ detektiert, da dann die Konzentration am Ende der zweiten Säule gerade $C_2 = d/D \, C_{feed} = C_{Grenz}$ beträgt.

## Claims

1. Process for frontal chromatographic decontamination of a solution having a starting concentration $C = C_{feed}$ up to a maximum limiting concentration $C_{limit}$, comprising the steps:

   a) two identical adsorption columns are provided in which the relation of particle diameter d of the column packing to the diameter D of the adsorption column is selected according to the relation of $C_{limit}$ to $C_{feed}$;
   b) the solution is conducted through the first adsorption column, where it is decontaminated at least partially;
   c) the solution emerging from the first adsorption column with concentration $C_1$ is fed to a measuring apparatus which measures the degree of contamination;
   d) the solution is then further decontaminated in the second adsorption column;
   e) steps a) to d) are terminated as soon as the measuring apparatus detects the concentration $C_1 = 0.5 \, C_{feed}$, since the concentration at the end of the second column then just amounts to $C_2 = d / D \, C_{feed} = C_{limit}$.

## Revendications

1. Procédé de décontamination chromatographique frontale d'une solution ayant une concentration de départ $C = C_{feed}$ jusqu'à une concentration limite $C_{grenz}$ maximum, comprenant les stades :

   a) on prévoit deux colonnes d'absorption identiques dans lesquelles on choisit le rapport du diamètre (d) des particules du garnissage des colonnes au diamètre (D) des colonnes d'absorption de manière correspondante au rapport de $C_{grenz}$ à $C_{feed}$,
   b) on fait passer la solution dans la première colonne d'absorption ou elle est décontaminée au moins en partie,
   c) on envoie la solution sortant de la première colonne d'absorption et ayant une concentration ($C_1$) à un appareil de mesure, qui mesure le degré de contamination,
   d) on continue à décontaminer la solution ensuite dans la deuxième colonne d'absorption,
   e) on interrompt les stades (a, à d) dès que l'appareil de mesure détecte la concentration $C_1 = 0{,}5 \, C_{feed}$, puisque alors la concentration à la fin de la deuxième colonne est exactement $C_2 = d / D \, C_{feed} = C_{grenz}$.

Figur 1

EP 1 066 101 B1